# EUROPÄISCHE PATENTSCHRIFT

(11) **EP 3 630 432 B1**
(45) Veröffentlichungstag und Bekanntmachung des Hinweises auf die Patenterteilung: **11.09.2024**
(21) Anmeldenummer: 18726793.5
(22) Anmeldetag: 22.05.2018
(51) Int. Cl.: B27N 1/00, B27N 1/02, B08B 17/06, B27N 3/04, B65G 53/52, B65G 53/58

(54) **BOGENKANALSYSTEM ZUR UMLENKUNG EINES PARTIKELSTROMS MIT BELEIMTEN PARTIKELN, VORRICHTUNG EINER ODER FÜR EINE ANLAGE ZUR HERSTELLUNG VON PRESSPLATTEN, UND EIN VERFAHREN ZUR VERHINDERUNG VON ABLAGERUNG VON LEIM UND/ODER PARTIKELN IN EINEM BOGENKANALSYSTEM**
CURVED CHANNEL SYSTEM FOR DEFLECTING A PARTICLE FLOW WITH GLUED PARTICLES, DEVICE OF OR FOR A SYSTEM FOR PRODUCING PRESSED BOARDS, AND A METHOD FOR PREVENTING THE ACCUMULATION OF GLUE AND/OR PARTICLES IN A CURVED CHANNEL SYSTEM
SYSTÈME DE CANAL COURBÉ SERVANT À DÉVIER UN FLUX DE PARTICULES COMPRENANT DES PARTICULES ENCOLLÉES, DISPOSITIF D'UNE INSTALLATION OU DESTINÉ À UNE INSTALLATION DE FABRICATION DE PANNEAUX DE PARTICULES, ET PROCÉDÉ SERVANT À EMPÊCHER L'ACCUMULATION DE COLLE ET/OU DE PARTICULES DANS UN SYSTÈME DE CANAL COURBÉ

(30) Priorität: 22.05.2017 DE 102017111181
(43) Veröffentlichungstag der Anmeldung: 08.04.2020
(73) Patentinhaber: DIEFFENBACHER GMBH Maschinen- und Anlagenbau, 75031 Eppingen (DE)
(72) Erfinder: ALLEROEDDER, Wolfgang, 75031 Eppingen (DE); SCHUMACHER, Matthias, 75031 Eppingen (DE)
(74) Vertreter: Hartdegen, Helmut
(86) Internationale Anmeldenummer: PCT/EP2018/063417
(87) Internationale Veröffentlichungsnummer: WO 2018/215490

(56) Entgegenhaltungen:
- DE-A1- 10 247 414
- DE-A1- 102006 024 895
- DE-A1- 102009 054 148
- DE-B3- 102004 054 162
- GB-A- 688 676
- JP-A- 2001 293 704
- JP-A- 2005 256 912

## Beschreibung

### Technisches Gebiet

Die Erfindung betrifft ein Bogenkanalsystem zur Umlenkung eines Partikelstroms mit beleimten Partikeln, die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind, mit einem wenigstens eine Biegung aufweisenden Bogenkanal zur Führung des Partikelstroms.

Ferner betrifft die Erfindung eine Vorrichtung einer oder für eine Anlage zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, mit wenigstens einer Beleimungseinrichtung zum Beleimen von Partikeln, mit wenigstens einem wenigstens eine Biegung aufweisenden Bogenkanal zur Führung eines Partikelstroms mit beleimten Partikeln und mit wenigstens einer Abscheideeinrichtung zur Abscheidung von Transportluft von den beleimten Partikeln.

Außerdem betrifft die Erfindung ein Verfahren zur Verhinderung von Ablagerung von Leim und/oder Partikeln an Wandungsinnenseiten wenigstens eines Bogenkanals zur Förderung eines Partikelstroms von beleimten Partikeln, die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind.

### Stand der Technik

Eine vom Markt her bekannten Vorrichtung einer Anlage zur Herstellung von Pressplatten weist eine Beleimungseinrichtung zum Beleimen von Holzfasern auf. Ferner verfügt die Vorrichtung über eine Abscheideeinrichtung zur Abscheidung von Transportluft von den beleimten Holzfasern. Zwischen der Beleimungseinrichtung der Abscheideeinrichtung ist ein Bogenkanal zur Führung des Faserstroms mit beleimten Holzfasern angeordnet, welcher eine 90°-Biegung aufweist, vgl. DE 10 2006 024 895 A1.

Eine ähnliche Vorrichtungen oder Verfahren zum Transport von beleimten Fasern ist aus der DE 10 2004 054 162 B3 bekannt.

Der Erfindung liegt die Aufgabe zugrunde, eine Bogenkanalsystem, eine Vorrichtung und ein Verfahren der eingangs genannten Art zu gestalten, bei denen einfacher und effizienter eine Ablagerung von Leim und/oder Partikeln an Wandungsinnenseiten wenigstens eines Bogenkanals zur Führung des Partikelstroms mit beleimten Partikeln verhindert werden kann.

### Offenbarung der Erfindung

Die Erfindung zur Lösung der technische Aufgabe ist für ein Bogenkanalsystem im unabhängigen Anspruch 1 wiedergegeben.

Über den Schutzpartikel-Zufuhrkanal können Schutzpartikel insbesondere in Form von bereits getrockneten beleimten Partikeln zugeführt werden. Die Schutzpartikel können dem Partikelstrom mit noch klebrigen beleimten Partikeln von der radial äußeren Wandlungsinnenseite zur Biegung hin führen. Die Schutzpartikel können gewisserma-ßen eine Art "Schutzkissen" bilden, auf dem die noch klebrigen beleimten Partikel durch die Biegung getragen werden. Auf diese Weise kann vermieden werden, dass die noch klebrigen beleimten Partikel aufgrund der Zentrifugalkraft nach radial außen an die entsprechende radial äußere Wandungsinnenseite des Bogenkanals gelangen und sich dort ablagern können.

Insbesondere hat der Bogenkanal Vorteile, da es mit ihm möglich ist die Bauhöhe einer Vorrichtung zur Bereitstellung von beleimten Partikeln zu verringern und/oder frisch beleimtes Material in einem Förderstrom umzulenken.

Hierzu kann der Bogenkanal in der Regel einen rechteckigen Querschnitt aufweisen. Weiter findet sich auf einer Seite insbesondere zu Beginn des Bogens außenseitig eine Zuführung für Schutzfasern, die entlang des größeren Radius sich schützend vor die Wandung legen. Um zu verhindern, dass sich frisch beleimte Fasern durch die Schutzfaser hindurch drücken und an die Wandung des Bogenkanals gelangen, kann über eine am äußeren Radius angebrachte Luftstütze des Bogenkanals gezielt Druckluft in den Bogenkanal eingeblasen werden. Das hierdurch entstehende Luftpolster sorgt für genügend Abstand zur Wandung des Bogenkanals bis die beleimten Fasern die Biegung hinter sich gebracht haben.

Vorteilhafterweise kann der Partikelstrom Transportluft aufweisen, welche die beleimten Partikel mitführt.

Vorteilhafterweise kann es sich bei den Partikeln um Fasern handeln. Mit Fasern kann durch entsprechendes Verleimen ein stabiler Verbund realisiert werden. Bei den Fasern kann es sich vorteilhafterweise um sogenannte mitteldicke Fasern (MDF) handeln. Mitteldicke Fasern haben in der Regel etwa eine Länge in der Größenordnung von etwa 2 mm und 5 mm, insbesondere etwa 3 mm, und eine Dicke in der Größenordnung von zwischen etwa 0,02 mm und 0,08 mm. Derartige Fasern können zur Herstellung von sogenannten MDF-Platten oder HDF-Platten eingesetzt werden.

Der Begriff "Luft" im Sinne der Erfindung bezieht sich außer auf Raumluft, Abluft oder dergleichen auch auf andersartige Gase, welche zur Verwendung insbesondere als Transportluft, Schutzluft, Düsenluft oder dergleichen in der Vorrichtung zur Bereitstellung von beleimten Partikeln geeignet sind.

Bei einer vorteilhaften Ausführungsform kann wenigstens ein Schutzpartikel-Zufuhrkanal in Strömungsrichtung des Partikelstroms betrachtet vor oder zu Beginn der wenigstens einen Biegung in den Bogenkanal münden. Die Schutzpartikel können so bereits vor der wenigstens einen Biegung eine Art "Schutzpartikelkissen" an der radial äußeren Innenseite der Wand des Bogenkanals bilden.

Bei einer weiteren vorteilhaften Ausführungsform kann wenigstens ein Bogenschutzluft-Zufuhrkanal direkt oder indirekt in den Bogenkanal führen. Über den Bogenschutzluft-Zufuhrkanal kann Bogenschutzluft zugeführt werden. Mit der Schutzluft können der Partikelstrom mit beleimten Partikel und gegebenenfalls die Schutzpartikel gestützt werden. Mit der Schutzluft kann eine Art "Druckkissen" oder "Schutzluftkissen" erzeugt werden. Der wenigstens eine Bogenschutzluft-Zufuhrkanal kann direkt in den Bogenkanal führen. Auf diese Weise sind keine zusätzlichen Bauteile erforderlich. Alternativ kann der wenigstens eine Bogenschutzluft-Zufuhrkanal indirekt insbesondere mittels wenigstens einer Bogenschutzluft-Zufuhrkammer in den Bogenkanal führen.

Bei einer weiteren vorteilhaften Ausführungsform kann wenigstens ein Bogenschutzluft-Zufuhrkanal an der bezüglich der wenigstens einen Biegung radial äußeren Seite direkt oder indirekt in den Bogenkanal führen. Über den Bogenschutzluft-Zufuhrkanal kann so Bogenschutzluft von radial außen in den Bogenkanal geleitet werden. Mit der Bogenschutzluft kann ein entsprechendes Schutzluftkissen realisiert werden, auf welchem die noch klebrigen beleimten Partikel radial außen durch den Bogenkanal geführt werden. Mithilfe des Schutzluftkissen kann ein Risiko, dass Partikel an der radial äußeren Wandlungsinnenseite des Bogenkanals hängen bleiben, weiter verringert werden. Auf diese Weise kann der Partikelstrom mit beleimten Partikeln und gegebenenfalls Schutzpartikel radial außen gestützt werden. So kann vermieden werden, dass die Partikel aufgrund der Zentrifugalkraft gegen die Innenwand des Bogenkanals gedrückt werden.

Vorteilhafterweise können etwa zwischen 28.000 m³ und 32.000 m³, insbesondere etwa 30.000 m³, Bogenschutzluft pro Stunde über den wenigstens einen Bogenschutzluft-Zufuhrkanal zugeführt werden.

Bei einer weiteren vorteilhaften Ausführungsform kann wenigstens ein Bogenschutzluft-Zufuhrkanal in der wenigstens einen Biegung direkt oder indirekt in den Bogenkanal führen. Auf diese Weise kann mit der Schutzluft zusätzlich eine Umlenkung der beleimten Partikel und gegebenenfalls von Schutzpartikeln an der bezüglich der Biegung radial äußeren Seite in Richtung der Ausleitung aus dem Bogenkanal unterstützt werden.

Vorteilhafterweise kann eine gedachte Achse des wenigstens einen Bogenschutzluft-Zufuhrkanals etwa parallel zu einer gedachten Achse des Bogenkanals auf dessen Auslassseite gerichtet sein. Dabei kann eine Mündung des Bogenschutzluft-Zufuhrkanals zur Auslassseite des Bogenkanals zeigen. Auf diese Weise kann ein mit der Bogenschutzluft erzeugtes Schutzluftkissen in Richtung der Strömung des Partikelstroms mit den beleimten Partikeln in dem Bereich des Auslasses des Bogenkanals beschleunigt werden. So können die klebrigen beleimten Partikeln in der Biegung des Bogenkanals radial außen von dem Schutzluftkissen aufgenommen und zur Auslassseite des Bogenkanals befördert werden.

Bei einer weiteren vorteilhaften Ausführungsform kann wenigstens ein Bogenschutzluft-Zufuhrkanal indirekt über wenigstens eine Bogenschutzluft-Zufuhrkammer in den Bogenkanal führen. Über die Bogenschutzluft-Zufuhrkammer kann eine großflächige Einleitung der Bogenschutzluft insbesondere im Bereich der Biegung des Bogenkanals erfolgen.

Bei einer weiteren vorteilhaften Ausführungsform können mehrere Durchtrittsöffnungen für Bogenschutzluft in Strömungsrichtung des Partikelstroms betrachtet hintereinander in der radial äußeren Wand der Biegung des Bogenkanals angeordnet sein. Durch die Durchtrittsöffnungen kann die Bogenschutzluft in den Bogenkanal eingeleitet werden. Durch geeignete Anordnung der Durchtrittsöffnungen kann die Bogenschutzluft gezielt in den Bogenkanal eingeleitet werden. Die Durchtrittsöffnungen können als Luftschlitze oder Luftspalte realisiert sein.

Bei einer weiteren vorteilhaften Ausführungsform kann eine bezüglich der Biegung radial äußeren Wand des Bogenkanals wenigstens eine Durchtrittsöffnung für Bogenschutzluft aufweisen, welche den Bogenkanal mit wenigstens einem Bogenschutzluft-Zufuhrkanal oder gegebenenfalls mit wenigstens einer Bogenschutzluft-Zufuhrkammer verbindet. Mit dem wenigstens einen Bogenschutzluft-Zufuhrkanal und gegebenenfalls der wenigstens einen Bogenschutzluft-Zufuhrkammer kann die Schutzluft zu den Durchtrittsöffnungen geführt werden. Durch die wenigstens eine Durchtrittsöffnung kann die Bogenschutzluft aus dem wenigstens einen Bogenschutzluft-Zufuhrkanal oder gegebenenfalls wenigstens eine Bogenschutzluft-Zufuhrkammer in den Innenraum des Bogenkanals gelangen.

Bei einer weiteren vorteilhaften Ausführungsform kann der Bogenkanal zumindest im Bereich wenigstens einer Biegung einen rechteckigen oder quadratischen Querschnitt aufweisen. Auf diese Weise kann der Partikelstrom besser in Form eines "Partikelteppichs" gebracht werden. Entsprechend kann das Schutzkissen aus Schutzpartikeln und/oder Bogenschutzluft gleichmäßig zwischen dem Partikelteppich und der Innenseite der radial äußeren Wand des Bogenkanals gebildet werden.

Bei einer weiteren vorteilhaften Ausführungsform kann der Bogenkanal vor und/oder nach wenigstens einer Biegung einen runden oder ovalen Querschnitt aufweisen. Ein runder oder ovaler Querschnitt hat den Vorteil, dass dort weitere Schutzluftzuführungen, insbesondere Schutzluftdüsen, einfacher angeordnet werden können. Diese weiteren Schutzluftzuführungen können dazu beitragen, dass der Partikelstrom möglichst zentral in der Mitte des Querschnitts des entsprechenden Kanals gehalten werden kann.

Bei einer weiteren vorteilhaften Ausführungsform kann ein Biegungswinkel wenigstens einer Biegung des Bogenkanals zwischen etwa 80° und 100°, insbesondere etwa 90°, betragen. Auf diese Weise kann der Partikelstrom bezüglich eines Zentralkanals einer Beleimungseinrichtung zur Seite hin umgelenkt werden. So kann neben der Beleimungseinrichtung gegebenenfalls mit einem geraden Förderkanal ein weiteres Vorrichtungsteil, insbesondere eine Abscheidevorrichtung für die Transportluft, platzsparend angeordnet werden. So kann die Vorrichtung zur Bereitstellung von beleimten Fasern insgesamt kompakter aufgebaut werden kann.

Vorteilhafterweise kann der Bogenkanal in Zentralströmungsrichtung des Partikelstroms betrachtet hinter einer Beleimungseinrichtung und/oder vor einer Abscheideeinrichtung der Vorrichtung zur Bereitstellung von beleimten Partikeln angeordnet sein.

Vorteilhafterweise kann der Bogenkanal im Bereich seines Einlasses und/oder seines Auslasses eine Querschnittsfläche von 1,75 m x 1,75 m aufweisen.

Vorteilhafterweise kann der Bogenkanal über einen geraden Förderkanal mit der Beleimungseinrichtung verbunden sein. Auf diese Weise können die beleimten Partikel in dem Förderkanal angetrocknet werden, sodass die Wahrscheinlichkeit, dass sie bei der Umlenkung in dem Bogenkanal an dessen Wandlungsinnenseiten haften bleiben, weiter verringert werden kann.

Vorteilhafterweise kann eine gedachte Achse des Schutzpartikel-Zufuhrkanals parallel zu einer gedachten Achse des Bogenkanals auf dessen Einlassseite gerichtet sein. Dabei kann eine Mündung des Schutzpartikel-Zufuhrkanals in Zentralströmungsrichtung zeigen. Auf diese Weise können die Schutzpartikel in tangentialer Richtung strömend zwischen dem "Teppich" mit den noch klebrigen beleimten Partikeln und der radial äußeren Wandungsinnenseite des Bogenkanals eingebracht werden. Die Schutzpartikel können so ein teppichförmiges "Schutzkissen" zwischen den noch klebrigen beleimten Partikeln und der radial äußeren Wandungsinnenseite des Bogenkanals bilden.

Die Erfindung zur Lösung der technische Aufgabe für eine Vorrichtung einer oder für eine Anlage zur Herstellung von Pressplatten ist im unabhängigen Anspruches 12 wiedergegeben.

Vorteilhafterweise kann die Vorrichtung wenigstens ein Mittel zur Realisierung eines Schutzluftmantels zwischen dem Partikelstrom und wenigstens einer Wandungsinnenseite wenigstens eines Kanals zur Führung des Partikelstroms aufweisen. Mit dem Schutzluftmantel kann eine Wahrscheinlichkeit verringert werden, dass sich Leim und/oder insbesondere beleimte Partikel an der Wandungsinnenseite des wenigstens einen Kanals ablagern.

Vorteilhafterweise kann wenigstens eine Abscheideeinrichtung wenigstens einen Zyklonabscheider aufweisen. Mit einem Zyklonabscheider kann effizient die Transportluft von den beleimten Partikeln getrennt werden.

Die Erfindung zur Lösung der technische Aufgabe ist für ein Verfahren unter Verwendung eines Bogenkanalsystems nach Anspruch 1 im unabhängigen Anspruch 13 wiedergegeben.

Mithilfe des Schutzkissens kann eine Wahrscheinlichkeit verringert werden, dass Leim und/oder Partikel mit der wenigstens einen Wandungsinnenseite in Berührung kommen und sich dort ablagern können.

Im Übrigen gelten die im Zusammenhang mit der erfindungsgemäßen Bogenkanalsystem, der erfindungsgemäßen Vorrichtung und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Es zeigen schematisch
- Figur 1: eine Vorrichtung zur Bereitstellung von beleimten Fasern zur Herstellung von Faserplatten, mit einer Beleimungseinrichtung, einem Trockenturm, einem Bogenkanal und einem Zyklonabscheider;
- Figur 2: einen Längsschnitt des Bogenkanals der Vorrichtung aus der Figur 1.

In den Figuren sind gleiche Bauteile mit gleichen Bezugszeichen versehen.

### Ausführungsform(en) der Erfindung

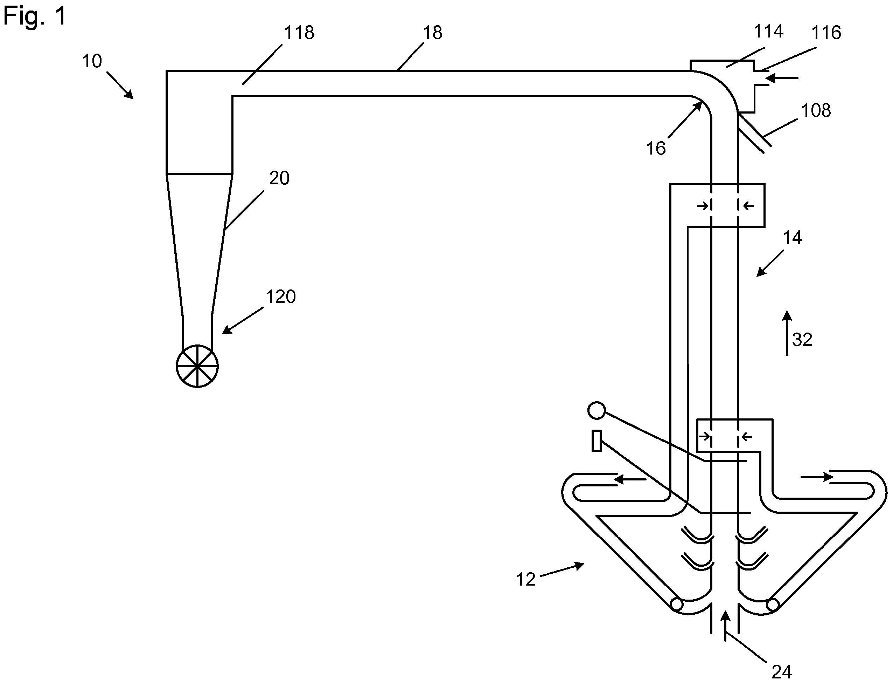

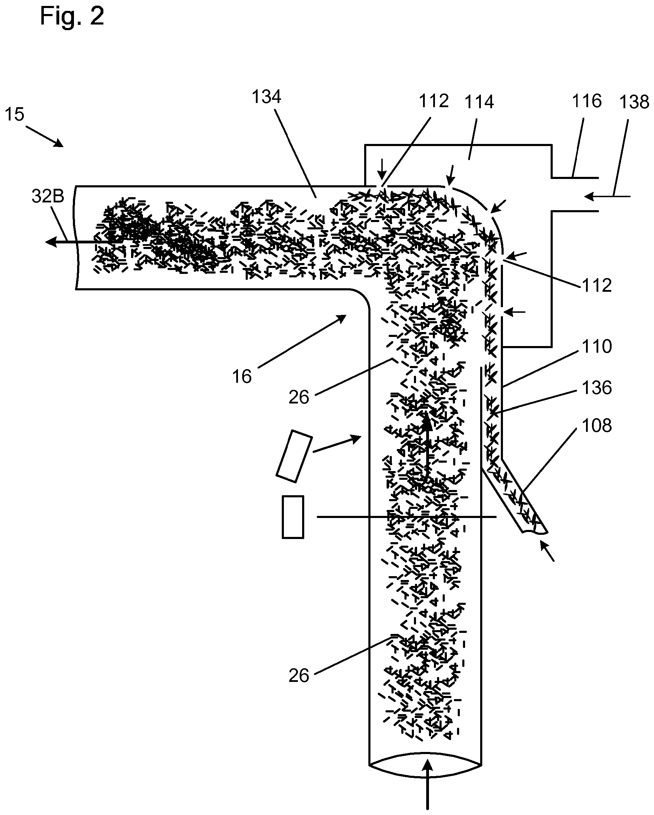

In der Figur 1 ist eine Vorrichtung 10 zur Bereitstellung von beleimten Partikeln in Form von in der Figur 2 angedeuteten Fasern 26 gezeigt. Die Vorrichtung 10 kann Teil einer ansonsten nicht gezeigten Anlage zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, sein.

Die Vorrichtung 10 umfasst funktional hintereinander angeordnet eine Beleimungseinrichtung 12, in der Figur 1 unten rechts, darüber einen Trockenturm 14, ein Bogenkanalsystem 15 mit einem Bogenkanal 16, einen Verbindungskanal 18 und einen Zyklonabscheider 20. Der Zyklonabscheider 20 befindet sich räumlich neben dem der Beleimungseinrichtung 12 und dem Trockenturm 14.

In der Beleimungseinrichtung 12 werden die Fasern 26 mit geeignetem Leim besprüht und dem Trockenturm 14 zugeführt. Die Fasern 26 werden dabei mit Transportluft 24 beispielsweise in Form von Druckluft als Partikelstrom in Form eines Faserstroms befördert.

In dem Trockenturm 14 werden die klebrigen beleimten Fasern 26 angetrocknet. Mit dem Bogenkanal 16 wird der Faserstrom um 90° umgelenkt und über den Verbindungskanal 18 dem Eingang des Zyklonabscheiders 20 zugeführt. Im Zyklonabscheider 20 wird die Transportluft 24 von den beleimten Fasern 26 getrennt. Die beleimten Fasern 26 werden zur weiteren Verarbeitung bereitgestellt.

Der Bogenkanal 16 schließt sich stromabwärts an den Trockenturm 14 an. Der Bogenkanal 16 befindet sich räumlich oberhalb des Trockenturms 14. Der Bogenkanal 16 wird im Folgenden anhand der Figur 2 näher erläutert.

Der Bogenkanal 16 weist einen rechteckigen oder quadratischen Querschnitt auf. Der runde Querschnitt des Trockenturms 14 geht gleichmäßig in den rechteckigen Querschnitt des Bogenkanals 16 über. Zwei Seiten des Bogenkanals 16 auf seiner Einlassseite verlaufen parallel zueinander. Der Bogenkanal 16 weist eine Biegung um 90° um eine gedachte Biegungsachse auf. Die gedachte Biegeachse erstreckt sich parallel zu den beiden oben genannten Seiten des Bogenkanals 16 und senkrecht zu einer Parallelen zur Zentralströmungsrichtung 32 der beleimten Partikel 26 auf der Einlassseite des Bogenkanals 16.

Auf seiner Auslassseite geht der Bogenkanal 16 in den Verbindungskanal 18 über.

In Zentralströmungsrichtung 32 betrachtet unmittelbar vor der Biegung des Bogenkanals 16 mündet ein Schutzfaser-Zufuhrkanal 108 des Bogenkanalsystems 15 radial au-ßen einseitig in den Bogenkanal 16. Im Bereich seiner Mündung 110 erstreckt sich der Schutzfaser-Zufuhrkanal 108 an der bezüglich der Biegung radial äußeren Seite des Bogenkanals 16 etwa parallel zur Zentralströmungsrichtung 32. Die Mündung 110 ist in Zentralströmungsrichtung 32 gerichtet.

Über den Schutzfaser-Zufuhrkanal 108 werden bereits getrocknete, beleimte Schutzfasern 136 dem Bogenkanal 16 zugeführt. Mit den Schutzfasern 136 wird verhindert, dass sich etwa noch klebrige beleimte Fasern 26 beim durchströmen des Bogenkanals 16 an dessen radial äußeren Wandungsinnenseite ablagern. Die Schutzfasern 136 bilden gewissermaßen ein "Schutzfaserkissen", auf dem ein Faserteppich aus dem Partikelstrom mit den noch klebrigen beleimten Fasern 26 um die Biegung des Bogenkanals 16 getragen wird.

In der radial äußeren Wand der Biegung des Bogenkanals 16 befindet sich eine Mehrzahl von Luftschlitzen 112. Der Bereich der Biegung mit den Luftschlitzen 112 ist radial außen von einer Bogenschutzluft-Zufuhrkammer 114 des Bogenkanalsystems 15 umgeben. In die Bogenschutzluft-Zufuhrkammer 114 mündet ein Bogenschutzluft-Zufuhrkanal 116 des Bogenkanalsystems 15. Eine gedachte Achse des Bogenschutzluft-Zufuhrkanals 116 verläuft parallel zur Zentralströmungsrichtung auf der Auslassseite des Bogenkanals 16. Die Zentralströmungsrichtung ist auf der Auslassseite des Bogenkanals 16 mit "32B" bezeichnet.

Über den Bogenschutzluft-Zufuhrkanal 116 werden etwa 30.000 m³ Bogenschutzluft 138 in Form von Druckluft pro Stunde von der Seite her zugeführt. Die Bogenschutzluft 138 bildet ein Schutzluftkissen 134, welches verhindert, dass beleimte Fasern 26 aufgrund der Zentrifugalkraft an die radial äußere Wandungsinnenseite des Bogenkanals 16 gelangen können. Auf dem Schutzluftkissen 134 und dem Schutzfaserkissen aus Schutzfasern 136 werden die beleimten Fasern 26 zum Auslass des Bogenkanals 16 geführt. Von dort aus gelangt der Partikelstrom mit den beleimten Fasern 26 in den Verbindungskanal 18.

Der Verbindungskanal 18 mündet in einen Einlass 118 des Zyklonabscheiders 20. Die beleimten Fasern 26 gelangen über den Verbindungskanal 18 und den Einlass 118 in den Zyklonabscheider 20.

Der Zyklonabscheider 20 ist räumlich vertikal angeordnet. Mit dem Zyklonabscheider 20 werden in hier nicht weiter interessierender Weise die Transportluft 24 von den beleimten Fasern 26 getrennt. An seiner räumlich unteren Seite weist er einen Auslass 120 für beleimte Fasern 26 auf. Die beleimten Fasern 26 verlassen den Zyklonabscheider 20 über den Auslass 120 und können zur weiteren Verwendung gesammelt oder direkt weitergeleitet werden. 1573

### Bezugszeichenliste P1573WO:

- 10: Vorrichtung zur Bereitstellung von beleimten Fasern
- 12: Beleimungseinrichtung
- 14: Trockenturm
- 15: Bogenkanalsystem
- 16: Bogenkanal
- 18: Verbindungskanal
- 20: Zyklonabscheider
- 24: Transportluft
- 26: beleimte Fasern
- 32: Zentralströmungsrichtung
- 32B: Zentralströmungsrichtung
- 108: Schutzfaser-Zufuhrkanal des Bogenkanals
- 110: Mündung des Schutzfaser-Zufuhrkanals
- 112: Luftschlitze des Bogenkanals
- 114: Bogenschutzluft-Zufuhrkammer
- 116: Bogenschutzluft-Zufuhrkanal
- 118: Einlass Zyklonabscheider
- 120: Auslass Zyklonabscheider
- 134: Schutzluftkissen
- 136: Schutzfasern
- 138: Bogenschutzluft

## Patentansprüche

1. Bogenkanalsystem (15) zur Führung und Umlenkung eines Partikelstroms mit beleimten Partikeln (26), die zur Herstellung von Pressplatten, insbesondere Werkstoffplatten aus Holz und/oder anderen nachwachsenden Agrarprodukten wie Span-, Faser-, Stroh- und Schnitzelplatten, sowie Kunststoffplatten, vorgesehen sind, mit einem wenigstens eine Biegung aufweisenden Bogenkanal (16) zur Führung und Umlenkung des Partikelstroms mit beleimten Partikeln (26), **gekennzeichnet durch** die Verwendung wenigstens eines Schutzpartikel-Zufuhrkanals (108) zur Einleitung von Schutzpartikeln (136) und Bildung einer Art Schutzkissens zwischen dem Partikelstrom mit beleimten Partikeln (26) und wenigstens einer Wandungsinnenseite des Bogenkanals (16) , wobei der Schutzpartikel-Zufuhrkanal (108) einseitig von der bezüglich der wenigstens einen Biegung radial äußeren Seite in den Bogenkanal (16) mündet.

2. Bogenkanalsystem nach Anspruch 1, **dadurch gekennzeichnet, dass** wenigstens ein Schutzpartikel-Zufuhrkanal (108) in Strömungsrichtung (32) des Partikelstroms betrachtet vor oder zu Beginn der wenigstens einen Biegung in den Bogenkanal (16) mündet.

3. Bogenkanalsystem nach Anspruch 1 oder 2, **dadurch gekennzeichnet, dass** wenigstens ein Bogenschutzluft-Zufuhrkanal (116) direkt oder indirekt in den Bogenkanal (16) führt.

4. Bogenkanalsystem nach einem der vorigen Ansprüche, **dadurch gekennzeichnet, dass** wenigstens ein Bogenschutzluft-Zufuhrkanal (116) an der bezüglich der wenigstens einen Biegung radial äußeren Seite direkt oder indirekt in den Bogenkanal (16) führt.

5. Bogenkanalsystem nach einem der vorigen Ansprüche, **dadurch gekennzeichnet, dass** wenigstens ein Bogenschutzluft-Zufuhrkanal (116) in der wenigstens einen Biegung direkt oder indirekt in den Bogenkanal (16) führt.

6. Bogenkanalsystem nach einem der vorigen Ansprüche, **dadurch gekennzeichnet, dass** wenigstens ein Bogenschutzluft-Zufuhrkanal (116) indirekt über wenigstens eine Bogenschutzluft-Zufuhrkammer (114) in den Bogenkanal (16) führt.

7. Bogenkanalsystem nach einem der vorigen Ansprüche, **dadurch gekennzeichnet, dass** mehrere Durchtrittsöffnungen (112) für Bogenschutzluft (138) in Strömungsrichtung (32) des Partikelstroms betrachtet hintereinander in der radial äußeren Wand der Biegung des Bogenkanals (16) angeordnet sind.

8. Bogenkanalsystem nach einem der vorigen Ansprüche, **dadurch gekennzeichnet, dass** eine bezüglich der Biegung radial äußeren Wand des Bogenkanals (16) wenigstens eine Durchtrittsöffnung (112) für Bogenschutzluft (138) aufweist, welche den Bogenkanal (16) mit wenigstens einem Bogenschutzluft-Zufuhrkanal (116) oder gegebenenfalls mit wenigstens einer Bogenschutzluft-Zufuhrkammer (114) verbindet.

9. Bogenkanalsystem nach einem der vorigen Ansprüche, **dadurch gekennzeichnet, dass** der Bogenkanal (16) zumindest im Bereich wenigstens einer Biegung einen rechteckigen oder quadratischen Querschnitt aufweist.

10. Bogenkanalsystem nach einem der vorigen Ansprüche, **dadurch gekennzeichnet, dass** der Bogenkanal (16) vor und/oder nach wenigstens einer Biegung einen runden oder ovalen Querschnitt aufweist.

11. Bogenkanalsystem nach einem der vorigen Ansprüche, **dadurch gekennzeichnet, dass** ein Biegungswinkel wenigstens einer Biegung des Bogenkanals (16) zwischen etwa 80° und 100°, insbesondere etwa 90°, beträgt.

12. Vorrichtung (10) einer oder für eine Anlage zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, mit wenigstens einer Beleimungseinrichtung (12) zum Beleimen von Partikeln (26), mit wenigstens einem wenigstens eine Biegung aufweisenden Bogenkanal (16) zur Führung eines Partikelstroms mit beleimten Partikeln (26) und mit wenigstens einer Abscheideeinrichtung (20) zur Abscheidung von Transportluft (24) von den beleimten Partikeln (26), **gekennzeichnet durch** wenigstens ein Schutzpartikel-Zufuhrkanal (108) zur Einleitung von Schutzpartikeln (136) und Bildung einer Art Schutzkissens zwischen dem Partikelstrom mit beleimten Partikeln (26) und wenigstens einer Wandungsinnenseite des Bogenkanals (16), wobei der Schutzpartikel-Zufuhrkanal (108) einseitig von der bezüglich der wenigstens einen Biegung radial äußeren Seite in den Bogenkanal (16) mündet.

13. Verfahren zur Verhinderung von Ablagerung von Leim und/oder Partikeln (26) an Wandungsinnenseiten wenigstens eines Bogenkanals (16) zur Förderung eines Partikelstroms von beleimten Partikeln (26), die zur Herstellung von Pressplatten, insbesondere Werkstoffplatten aus Holz und/oder anderen nachwachsenden Agrarprodukten wie Span-, Faser-, Stroh-, und Schnitzelplatten, sowie Kunststoffplatten, vorgesehen sind, **dadurch gekennzeichnet, dass** unter Verwendung eines Bogenkanalsystems nach Anspruch 1 in dem Bogenkanal (16) Schutzpartikel (136) von einer bezüglich der wenigstens einen Biegung radial äußeren Seite mit einer Strömungsrichtung etwa parallel oder schräg zu einer Zentralströmungsrichtung (32) eines Partikelstroms aus Transportluft (24) mit beleimten Partikeln (26) so zugeführt wird, dass die Schutzpartikel (136) eine Art Schutzkissen zwischen dem Partikelstrom und wenigstens einer Wandungsinnenseite des Bogenkanals (16) bilden.

## Claims

1. Curved channel system (15) for guiding and deflecting a particle flow with glued particles (26), which are provided for the production of pressed boards, in particular material boards made of wood and/or other renewable agricultural products such as particle boards, fiber boards, straw boards and chip boards, as well as plastic boards, having a curved channel (16) comprising at least one bend for guiding and deflecting the particle flow with glued particles (26), **characterized by** the use of at least one protective particle feed channel (108) for introducing protective particles (136) and forming a kind of protective cushion between the particle flow with glued particles (26) and at least one inner wall side of the curved channel (16), wherein the protective particle feed channel (108) opens into the curved channel (16) on one side from the radially outer side with respect to the at least one bend.

2. Curved channel system according to claim 1, **characterized in that** at least one protective particle feed channel (108) opens into the curved channel (16) before or at the beginning of the at least one bend, as viewed in the flow direction (32) of the particle flow.

3. Curved channel system according to claim 1 or 2, **characterized in that** at least one curve protection air feed channel (116) leads directly or indirectly into the curved channel (16).

4. Curved channel system according to one of the preceding claims, **characterized in that** at least one curve protection air feed channel (116) leads directly or indirectly into the curved channel (16) on the radially outer side with respect to the at least one bend.

5. Curved channel system according to one of the preceding claims, **characterized in that** at least one curve protection air feed channel (116) leads directly or indirectly into the curved channel (16) in the at least one bend.

6. Curved channel system according to one of the preceding claims,
**characterized in that** at least one curve protection air feed channel (116) leads indirectly into the curved channel (16) via at least one curve protection air feed chamber (114).

7. Curved channel system according to one of the preceding claims,
**characterized in that** a plurality of passage openings (112) for curve protection air (138) are arranged one behind the other in the radially outer wall of the bend of the curved channel (16), as viewed in the flow direction (32) of the particle flow.

8. Curved channel system according to one of the preceding claims,
**characterized in that** a radially outer wall of the curved channel (16) with respect to the bend has at least one passage opening (112) for curve protection air (138), which connects the curved channel (16) to at least one curve protection air feed channel (116) or optionally to at least one curve protection air feed chamber (114).

9. Curved channel system according to one of the preceding claims,
**characterized in that** the curved channel (16) has a rectangular or square cross-section at least in the region of at least one bend.

10. Curved channel system according to one of the preceding claims, **characterized in that** the curved channel (16) has a round or oval cross-section before and/or after at least one bend.

11. Curved channel system according to one of the preceding claims, **characterized in that** a bending angle of at least one bend of the curved channel (16) is between approximately 80° and 100°, in particular approximately 90°.

12. Device (10) of or for a plant for the production of pressed boards, in particular material boards made of wood and/or other renewable agricultural products such as particle boards, fiber boards, straw boards and chip boards, as well as plastic boards, having at least one gluing device (12) for gluing particles (26), having at least one curved channel (16) comprising at least one bend for guiding a particle flow with glued particles (26) and having at least one separating device (20) for separating transport air (24) from the glued particles (26), **characterized by** at least one protective particle feed channel (108) for introducing protective particles (136) and forming a kind of protective cushion between the particle flow with glued particles (26) and at least one inner wall side of the curved channel (16), wherein the protective particle feed channel (108) opens into the curved channel (16) on one side from the radially outer side with respect to the at least one bend.

13. Method for preventing the deposition of glue and/or particles (26) on the inner wall sides of at least one curved channel (16) for conveying a particle flow of glued particles (26) which are provided for the production of pressed boards, in particular material boards made of wood and/or other renewable agricultural products such as particle boards, fiber boards, straw boards, chip boards and plastic boards, **characterized in that**, using a curved channel system according to claim 1, protective particles (136) are fed into the curved channel (16) from a radially outer side with respect to the at least one bend with a flow direction approximately parallel or oblique to a central flow direction (32) of a particle flow of transport air (24) with glued particles (26) in such a way that the protective particles (136) form a kind of protective cushion between the particle flow and at least one inner wall side of the curved channel (16).

## Revendications

1. Système de conduit courbé (15) servant à guider et dévier un flux de particules avec des particules encollées (26), qui sont prévues aux fins de la fabrication de panneaux pressés, en particulier de panneaux de matériaux à base de bois et/ou d'autres produits agricoles renouvelables, tels que des panneaux de particules, de fibres, de paille et de copeaux, ainsi que des panneaux de matière synthétique, avec un conduit courbé (16) présentant au moins une courbure servant à guider et dévier le flux de particules avec des particules encollées (26), **caractérisé par** l'utilisation d'au moins un conduit d'acheminement de particules de protection (108) pour l'introduction de particules de protection (136) et la formation d'une sorte de coussin de protection entre le flux de particules avec des particules encollées (26) et au moins une face intérieure de paroi du conduit courbé (16), le conduit d'acheminement de particules de protection (108) débouchant dans le conduit courbé (16) d'un côté du côté radialement extérieur par rapport à l'au moins une courbure.

2. Système de conduit courbé selon la revendication 1, **caractérisé en ce qu'**au moins un conduit d'acheminement de particules de protection (108), vu dans le sens d'écoulement (32) du flux de particules, débouche dans le conduit courbé (16) avant ou au début de ladite au moins une courbure.

3. Système de conduit courbé selon la revendication 1 ou 2, **caractérisé en ce qu'**au moins un conduit courbé d'écoulement d'air de protection (116) mène directement ou indirectement dans le conduit courbé (16).

4. Système de conduit courbé selon l'une des revendications précédentes, **caractérisé en ce qu'**au moins un conduit courbé d'acheminement d'air de protection (116) mène directement ou indirectement dans le conduit courbé (16) sur le côté radialement extérieur par rapport à ladite au moins une courbure.

5. Système de conduit courbé selon l'une des revendications précédentes, **caractérisé en ce qu'**au moins un conduit courbé d'acheminement d'air de protection (116) mène directement ou indirectement dans le conduit courbé (16) dans ladite au moins une courbure.

6. Système de conduit courbé selon l'une des revendications précédentes, **caractérisé en ce qu'**au moins un conduit courbé d'acheminement d'air de protection (116) mène indirectement dans le conduit courbé (16) via au moins une chambre courbée d'acheminement d'air de protection (114).

7. Système de conduit courbé selon l'une des revendications précédentes, **caractérisé en ce que** plusieurs ouvertures de passage (112) pour l'air de protection courbé (138) sont disposées les unes derrière les autres dans la paroi radialement extérieure de la courbure du conduit courbé (16), vu dans le sens d'écoulement (32) du flux de particules.

8. Système de conduit courbé selon l'une des revendications précédentes, **caractérisé en ce qu'**une paroi du conduit courbé (16) radialement extérieure par rapport à la courbure présente au moins une ouverture de passage (112) pour l'air de protection courbé (138), qui relie le conduit courbé (16) à au moins un conduit courbé d'acheminement d'air de protection (116) ou le cas échéant à au moins une chambre courbée d'acheminement d'air de protection (114).

9. Système de conduit courbé selon l'une des revendications précédentes, **caractérisé en ce que** le conduit courbé (16) présente une section transversale rectangulaire ou carrée au moins dans la zone d'au moins une courbure.

10. Système de conduit courbé selon l'une des revendications précédentes, **caractérisé en ce que** le conduit courbé (16) présente une section transversale ronde ou ovale avant et/ou après au moins une courbure.

11. Système de conduit courbé selon l'une des revendications précédentes, **caractérisé en ce qu'**un angle de courbure d'au moins une courbure du conduit courbé (16) est compris entre environ 80° et 100°, notamment environ 90°.

12. Dispositif (10) d'une ou pour une installation de fabrication de panneaux pressés, en particulier de panneaux de matériaux à base de bois et/ou d'autres produits agricoles renouvelables, tels que des panneaux de particules, de fibres, de paille et de copeaux, ainsi que des panneaux de matière synthétique, avec au moins un dispositif d'encollage (12) pour encoller des particules (26), avec au moins un conduit courbé (16) présentant au moins une courbure pour guider un flux de particules avec des particules encollées (26) et avec au moins un dispositif de séparation (20) pour séparer l'air de transport (24) des particules encollées (26), **caractérisé par** au moins un conduit d'acheminement de particules de protection (108) pour l'introduction de particules de protection (136) et la formation d'une sorte de coussin de protection entre le flux de particules avec des particules encollées (26) et au moins une face intérieure de paroi du conduit courbé (16), le conduit d'acheminement de particules de protection (108) débouchant dans le conduit courbé (16) d'un côté du côté radialement extérieur par rapport à ladite au moins une courbure.

13. Procédé pour empêcher l'accumulation de colle et/ou de particules (26) sur les faces intérieures de paroi d'au moins un conduit courbé (16) pour le transport d'un flux de particules des particules encollées (26), qui sont prévues pour la fabrication de panneaux pressés, en particulier de panneaux de matériaux à base de bois et/ou d'autres produits agricoles renouvelables, tels que des panneaux de particules, de fibres, de paille et de copeaux, ainsi que des panneaux en matière synthétique, **caractérisé en ce que**, en utilisant un système de conduit courbé selon la revendication 1, des particules de protection (136) sont acheminées dans le conduit courbé (16) depuis un côté radialement extérieur par rapport à l'au moins une courbure, avec une direction d'écoulement à peu près parallèle ou oblique par rapport à une direction d'écoulement centrale (32) d'un flux de particules d'air de transport (24) avec des particules encollées (26), de telle sorte que les particules de protection (136) forment une sorte de coussin de protection entre le flux de particules et au moins une face intérieure de paroi du conduit courbé (16).
